# EUROPEAN PATENT SPECIFICATION

(11) **EP 1 178 598 B1**
(45) Date of publication and mention of the grant of the patent: **30.12.2009**
(21) Application number: 01117764.9
(22) Date of filing: 31.07.2001
(51) Int. Cl.: H02P 6/04, H02P 5/50

(54) **A method for synchronizing several brushless motors in an elevating device**
Synchronisierungsverfahren für mehrere bürstenlose Motoren in einer Hubvorrichtung
Procédé de synchronisation pour plusieurs moteurs sans balai dans un dispositif élévateur

(30) Priority: 01.08.2000 JP 2000232802
(43) Date of publication of application: 06.02.2002
(73) Proprietor: ITOH ELECTRIC CO., LTD., Kasai-shi, Hyogo-ken (JP)
(72) Inventor: Itoh, Kazuo, Kasai-shi, Hyogo-ken (JP); Tachibana, Toshiyuki, Himeji-shi, Hyogo-ken (JP)
(74) Representative: Glawe, Delfs, Moll

(56) References cited:
- EP-A- 0 526 116
- GB-A- 1 148 437
- US-A- 3 886 417

## Description

The present invention relates to a method for elevating an elevating device while maintaining a certain position, for example, a horizontal position when elevating an elevating device using several motors. In this method, brushless motors are used to drive the elevating device, and these brushless motors are accurately synchronized to drive the elevating means.

In an elevating device, elevating means are arranged at four corners of the elevating component for balance so that the elevating component can be raised or lowered in a stable manner. Otherwise, if the elevating component is supported at one point for example, the elevating component cannot be raised or lowered in a stable manner. Conventionally, elevating devices of this type employ timing belts or chains to transmit power of one motor while mechanically synchronizing the elevating means at the four corners.

United States Patent No. 3886417 discloses a method for controlling several motors in an elevating device with several elevating means arranged at several positions of the elevating component said elevating means are individually driven by motors.

Great Britain Patent No. 1148437 discloses a method for synchronizing several motors with transporting means which are individually driven by motors the rpms of the motors for the transporting means are detected as pulse signals, the pulse signal of one brushless motor is compared with the pulse signal of another brushless motor, and the two motors are controlled accordingly to the difference in speed of the two motors.

Japanese Patent Laid-Open No. 191299/2000 discloses a concept that employs an elevating device powered by four motors arranged at four corners of the elevating component, in which the four motors are synchronized by a control device to drive the elevating means at the four corners.

The conventional method in which a timing belt or a timing chain is used to mechanically transmit the torque of one motor to several elevating means requires a powerful motor. In addition, a complicated power transmission mechanism is arranged in a large space, so the size of the device tends to be quite large. Although Japanese Patent Laid-Open No. 191299/2000 discloses the concept that employs an elevating device powered by four motors arranged at four corners of the elevating component, in which the four motors are synchronized by a control device to drive the elevating means at the four corners, no specific method for synchronization is disclosed.

In the light of such a background, the present invention proposes a method for easily and accurately synchronizing several brushless motors, which can be obtained inexpensively.

Several elevating means are arranged at several positions of the elevating component. The elevating means are driven individually by brushless motors 9. The rpms of the brushless motors for the elevating means are detected as pulse signals. The pulse signal of any one brushless motor is compared with the pulse signal of at least another brushless motor. When the pulse signal of one brushless motor is larger than the pulse signal of the compared brushless motor, said brushless motor having the larger pulse signal stops. When the pulse signal of one brushless motor is smaller than the pulse signal of the compared brushless motor, said brushless motor having the smaller pulse signal rotates. In this way, all the brushless motors of the elevating means can be synchronized.

To compare pulse signals of the brushless motors 9, the pulse signals of two adjacent elevating means are compared so as to correlate the pulse signals of all brushless motors, and when the pulse signal of one brushless motor is larger than any one of the compared pulse signals, said brushless motor having the larger pulse signal stops. In this way, the comparison chain of the pulse signals covers all the brushless motors, making it possible to synchronize all the brushless motors without fail. The stopping signal for a brushless motor may be used to decelerate the brushless motor.

As an elevating means, a motor roller 1 incorporating a brushless motor 9 may be used with a rope or a belt wound around it. In this way, the whole structure can be made quite simple.

Conventionally, in an elevating device using several elevating means, the rotation of one motor was used to drive the several elevating means while mechanically synchronizing the elevating means using a chain or a timing belt. According to the method for synchronizing several brushless motors in an elevating device described in claim 1, several brushless motors can be driven synchronously to drive several elevating means. In this method, compact brushless motors can be used as power units without the need for mechanical synchronizing means between the several elevating means, making it possible to design a compact elevating device that requires a compact space. The brushless motors, which are used as power units, can be synchronized without fail, making possible smooth driving of the elevating device.

According to the invention described in claim 2, all brushless motors can be synchronized without fail regardless of the number of elevating means.

According to the invention described in claim 3, a motor roller only needs to be mounted as an elevating means to reel in a rope or a belt. Therefore, there is no need to mount a motor and a reel separately, resulting in a simplified elevating device.

Embodiments of the method for synchronizing several brushless motors in an elevating device according to the present invention will now be explained with reference to the accompanying drawings.

FIG. 1 is a block diagram showing the control mechanism of the synchronizing method for several brushless motors in the elevating device of the present invention.

FIG. 2 is a flow chart showing the flow of the control method.

FIG. 3 is a schematic drawing showing an example of an elevating device using a motor roller as a driving means.

FIG. 4 is a schematic drawing showing an example of another elevating device using a motor roller as a driving means.

FIG. 5 is a longitudinal section view showing an example of a motor roller used as a reeling device for an elevating device.

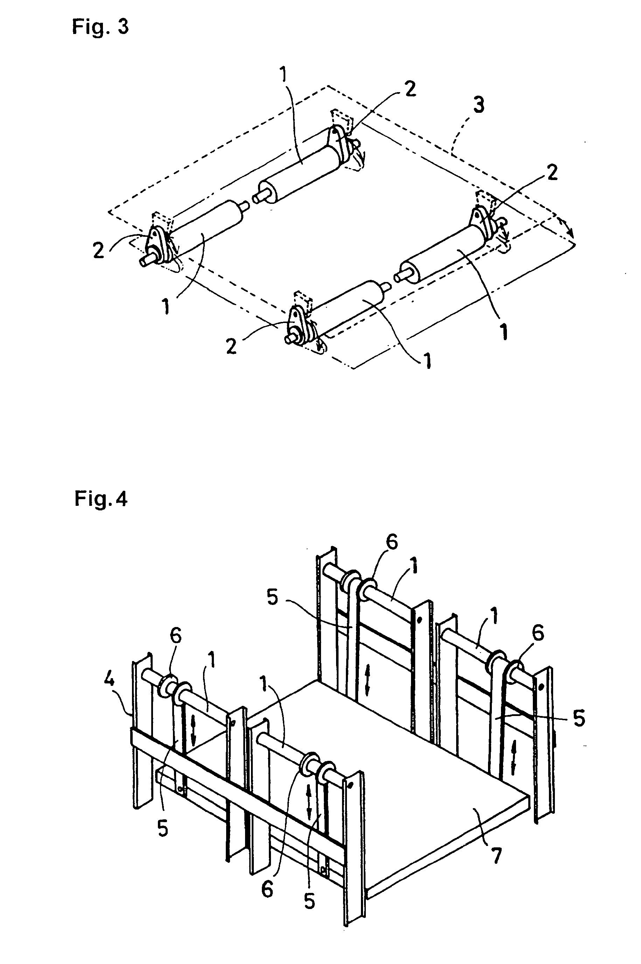

FIGS. 3 and 4 are schematic drawings of examples using motor rollers incorporating brushless motors as elevating means.

The elevating device shown in FIG. 3 comprises an elevating platform 3 and four motor rollers 1, 1 each equipped with an eccentric cam (arm) 2. When the motor rollers are turned 90°, the elevating platform is raised and lowered between the position indicated by the dotted line and the position indicated by the two-dot chain line. This elevating device is placed at an appropriate position along the conveyor line and used as a sorting device that discharges a conveyed item sideways by raising the elevating device 3. The elevating device 3 of this embodiment raises or lowers the elevating platform 3 by rotating the motor roller 1 at a certain angle.

The elevating device shown in FIG. 4 comprises an elevating platform 7, a frame 4 and two motor rollers 1, 1 each at the top of the left and right sides of the frame 4. A portion of each motor roller 1 is provided with a reel 6 on which a belt 5 is rolled. The ends of the belts 5, 5 are fastened to the four corner areas. The belts 5, 5 are reeled in or out at the same speed, thereby raising or lowering the elevating platform while maintaining the horizontal position. This elevating device can be embodied as an elevating device for a wheelchair.

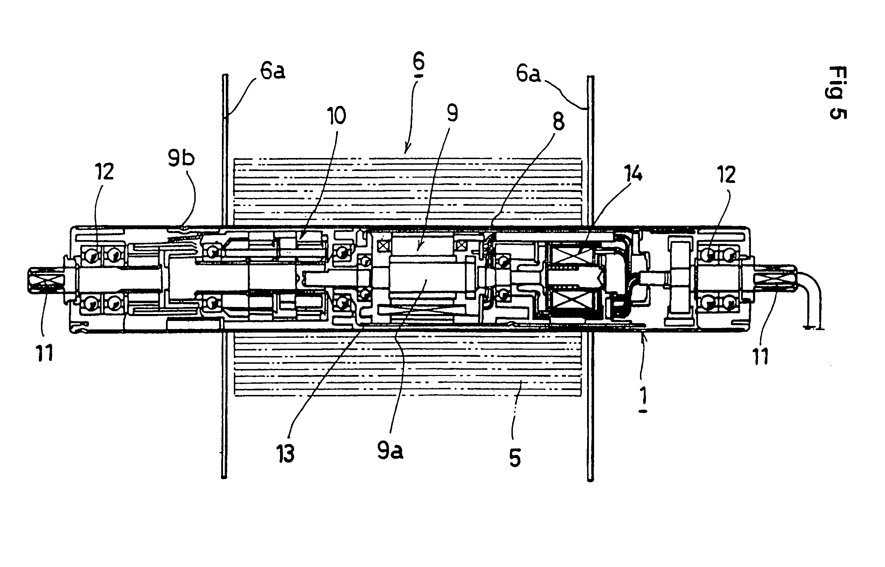

FIG. 5 is a longitudinal section view of a motor roller 1, which functions as a reel 6. The motor roller 1 shown in FIG. 5 incorporates a brushless motor 9 inside its external tube 8, and the rotation of the rotor 9a of the brushless motor 9 is transmitted to the external tube 8 from an output part 9b via a reduction gear 10. The roller is attached to the frame 4 via fixed shafts 11. The external tube 8, which is linked to the rotor shaft 9a, rotates against the fixed shafts 11. Between the external tube 8 and the fixed shafts 11, bearings 12 are provided for smooth rotation. Inside the external tube 8, there is a fixed tube 6, which is provided with an electromagnetic brake 14 so as to be able to stop the rotation of the rotor shaft 9a physically. The motor roller 1 has guide rings 6a, 6a fastened on the external tube 8 so that a portion of the external tube 8 functions as the reel 6 for the belt 5.

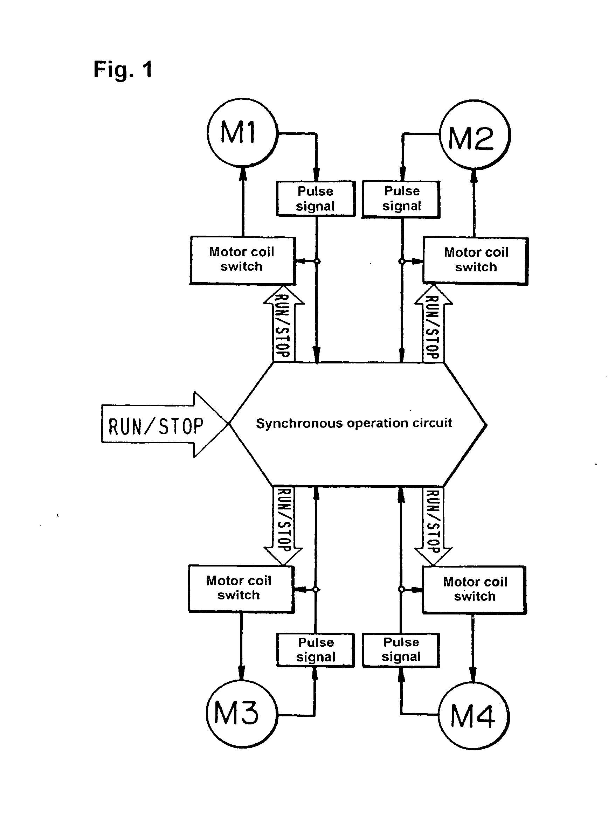

The operation of the four brushless motors 9 (motor roller 1) will now be explained with reference to FIG. 1. As shown in FIG. 1, when a signal is input to the synchronous operation circuit, it is judged as a run signal or a stop signal by the synchronous operation circuit. Then the signal, which could be a run signal or a stop signal or a switch signal depending on the judgement of the synchronous operation circuit, is transmitted to M1 to M4, which are brushless motors 9, 9. The rotation conditions of the brushless motors are fed back to the synchronous operation circuit as pulse signals, and compared with each other for all four brushless motors. Then run signals are transmitted to these brushless motors in such a way that they are synchronized.

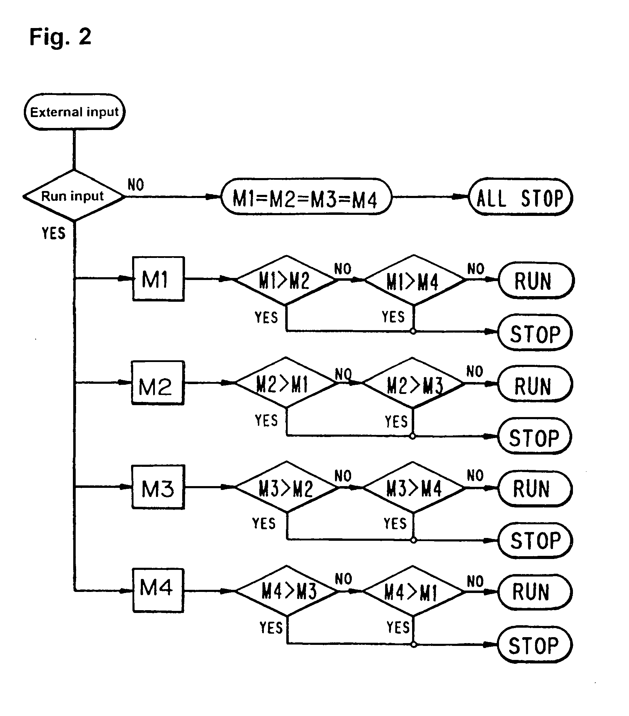

The control method for each brushless motor will now be explained with reference to FIG. 2. When there is no run signal from outside (when the external run signal is NO), the pulse signals for all of the brushless motors M1 to M4 are zero. In this case, stop signals are sent to all brushless motors, and the stopped condition is maintained. When there is a run signal (when the run signal is YES), M1 is compared with M2, which is adjacent to M1. If the number of pulses of M1 is larger, M1 stops. If the number is smaller, then M1 is compared with M4, another adjacent motor. If the number of pulses of M1 is larger, M1 stops. M1 runs (rotates) only when the number is smaller.

Next, M2 is compared with M1, which is adjacent to M2. If the number of pulses of M2 is larger, M2 stops. If the number is smaller, then M2 is compared with M3, another adjacent motor. If the number of pulses of M2 is larger, M2 stops. M2 runs (rotates) only when the number is smaller, In the same way, M3 is compared with M2 and M4 and stops or runs accordingly, and M4 is compared with M3 and M1 and stops or runs accordingly. At this time, if the numbers of the pulses are the same, the pulses are treated as run (rotate) signals. If a run signal is input from outside and a stop signal is sent to any of the brushless motors, said stop signal can be replaced with a deceleration signal. In this case, the movement of the elevating device becomes smoother.

As explained above, the brushless motors M1 to M4 form a comparative link in which the numbers of pulses are compared with each other among different pulse signals. In other words, the pulse signals of all brushless motors are directly or indirectly compared with each other. In this way, all brushless motors 9, 9 synchronize accurately. Depending on the type of elevating device, any number of brushless motors, i.e., elevating means, can be used.
Even in an application using a larger number of brushless motors, the same means can be used to control them. When using motor rollers incorporating brushless motors, the rpms of the motors can be detected as pulses at the motor driver that functions as the motor-roller driver. In this way, a synchronous operation circuit is easily accomplished without a special device for detecting pulses.

In a motor roller 1 incorporating a reduction gear, every time the external tube 8 of the motor roller turns, the brushless motor 9 turns several times, making it possible to detect several pulse signals. Because of this, as shown in FIG. 3, even in an elevating device in which the motor roller 1 rotates at a certain angle, the rpm of the motor roller can be accurately synchronized. When the motor roller 1 is used as a reel for reeling in a rope or a belt in an elevating device, an appropriate reduction ratio or diameter of the motor roller can be chosen taking into consideration the range and speed of elevation of the elevating device to achieve the elevating device that best suits the purpose.
- 1:: motor roller
- 2:: eccentric cam
- 3:: elevating platform
- 4:: frame
- 5:: belt
- 6:: reel
- 7:: elevating platform
- 8:: external tube
- 9:: brushless motor
- 9a:: rotor shaft
- 9b:: output part
- 10:: reduction gear
- 11:: fixed shaft
- 12:: bearing
- 13:: fixed tube
- 14:: electromagnetic brake

## Claims

1. A method for synchronizing several brushless motors (M1,M2,M3,M4) in an elevating device, with several elevating means arranged at several positions of the elevating component (7), said elevating means are individually driven by brushless motors (M1,M2,M3,M4), the rpms of the brushless motors for the elevating means are detected as pulse signals, the pulse signal of any one brushless motor (M) is compared with the pulse signal of at least another brushless motor (M), and when the pulse signal of one brushless motor (M) is larger than the pulse signal of the compared brushless motor (M), said brushless motor (M) having the larger pulse signal stops and when the pulse signal of one brushless motor (M) is smaller than the pulse signal of the compared brushless motor (M), said brushless motor having the smaller pulse signal rotates, thereby synchronizing all the brushless motors (M) of the elevating means.

2. A method for synchronizing several brushless motors (M1,M2,M3,M4) in an elevating device described in claim 1, **characterized in that** the pulse signals of two adjacent elevating means are compared so as to correlate the pulse signals of all brushless motors (M1,M2,M3,M4), and when the pulse signal of one brushless motor (M) is larger than any one of the compared pulse signals, said brushless motor (M) having the larger pulse signal stops.

3. A method for synchronizing several brushless motors (M1,M2,M3,M4) in an elevating device described in claim 1 or 2, in which the elevating device is a motor roller (1) having a built-in brushless motor (M).

## Patentansprüche

1. Verfahren zum Synchronisieren mehrerer bürstenloser Motoren (M1, M2, M3, M4) in einer Hebevorrichtung mit mehreren Hebemitteln, die an mehreren Positionen der Hebekomponente (7) angeordnet sind, wobei die Hebemittel individuell durch bürstenlose Motoren (M1, M2, M3, M4) angetrieben werden, wobei die Umdrehungszahlen der bürstenlosen Motoren für die Hebemittel als Impulssignale detektiert werden, das Impulssignal irgendeines bürstenlosen Motors (M) mit dem Impulssignal von wenigstens einem anderen bürstenlosen Motor (M) verglichen wird, und wenn das Impulssignal eines bürstenlosen Motors (M) größer als das Impulssignal des mit diesem verglichenen bürstenlosen Motor (M) ist, stoppt der bürstenlose Motor (M) mit dem größeren Impulssignal, und wenn das Impulssignal eines bürstenlosen Motors (M) kleiner als das Impulssignal des mit diesem verglichenen bürstenlosen Motors (M) ist, der bürstenlose Motor mit dem kleineren Impulssignal rotiert, wodurch alle bürstenlosen Motoren (M) der Hebemittel synchronisiert werden.

2. Verfahren zum Synchronisieren mehrerer bürstenloser Motoren (M1, M2, M3, M4) in einer Hebevorrichtung nach Patentanspruch 1, **dadurch gekennzeichnet, dass** die Impulssignale von zwei benachbarten Hebemittein verglichen werden, um die Impulssignale aller bürstenlosen Motoren (M1, M2, M3, M4) zu korrelieren, und wenn das Impulssignal eines bürstenlosen Motors (M) größer als irgendeines der verglichenen Impulssignale ist, stoppt der bürstenlose Motor (M), der das größere Impulssignal hat.

3. Verfahren zum Synchronisieren mehrerer bürstenloser Motoren (M1, M2, M3, M4) in einer Hebevorrichtung nach Patentanspruch 1 oder 2, wobei die Hebevorrichtung eine Motorlaufwalze (1) ist, die einen eingebauten bürstenlosen Motor (M) aufweist.

## Revendications

1. Procédé de synchronisation de plusieurs moteurs sans balais (M1, M2, M3, M4) dans un dispositif élévateur, avec plusieurs moyens élévateurs agencés à plusieurs positions du composant élévateur (7), lesdits moyens élévateurs étant entraînés individuellement par des moteurs sans balais (M1, M2, M3, M4), les tours par minute des moteurs sans balais pour les moyens élévateurs étant détectés sous forme de signaux impulsionnels, le signal impulsionnel de l'un quelconque des moteurs sans balais (M) étant comparé avec le signal impulsionnel d'au moins un autre moteur sans balais (M), et lorsque le signal impulsionnel d'un moteur sans balais (M) est plus grand que le signal impulsionnel du moteur sans balais (M) comparé, ledit moteur sans balais (M) ayant le signal impulsionnel plus grand s'arrête et lorsque le signal impulsionnel d'un moteur sans balais (M) est plus petit que le signal impulsionnel du moteur sans balais (M) comparé, ledit moteur sans balais ayant le signal impulsionnel plus petit tourne, en synchronisant ainsi tous les moteurs sans balais (M) des moyens élévateurs.

2. Procédé de synchronisation de plusieurs moteurs sans balais (M1, M2, M3, M4) dans un dispositif élévateur selon la revendication 1, **caractérisé en ce que** les signaux impulsionnels de deux moyens élévateurs adjacents sont comparés de façon à corréler les signaux impulsionnels de tous les moteurs sans balais (M1, M2, M3, M4), et lorsque le signal impulsionnel d'un moteur sans balais (M) est plus grand que l'un quelconque des signaux d'impulsionnels comparés, ledit moteur sans balais (M) ayant le signal impulsionnel plus grand s'arrête.

3. Procédé de synchronisation de plusieurs moteurs sans balais (M1, M2, M3, M4) dans un dispositif élévateur selon la revendication 1 ou 2, dans lequel le dispositif élévateur est un rouleau motorisé (1) ayant un moteur sans balais (M) incorporé.
